# EUROPÄISCHE PATENTSCHRIFT

(11) **EP 0 580 975 B1**
(45) Veröffentlichungstag und Bekanntmachung des Hinweises auf die Patenterteilung: **26.06.1996**
(21) Anmeldenummer: 93108051.9
(22) Anmeldetag: 18.05.1993
(51) Int. Cl.: B29C 45/17

(54) **Vorrichtung zum Erzeugen der Düsenanlagekraft, mit der eine Düse eines von einem Spindelantrieb angetriebenen Plastifizier- und Einspritzaggregats gegen die auf die feststehende Formaufspannplatte aufgespannte Formhälfte ansteht**
Apparatus for generating the nozzle touching force by which the nozzle of a plasticising and injection unit driven by a srew is applied to the fixed mould half
Dispositif pour générer la force de contact de brise par laquelle la brise d'une unité de plastification et d'injection entraînée par une vis est appliquée contre la moitié de moule fixe

(30) Priorität: 11.06.1992 DE 4219081; 29.09.1992 DE 4232533
(43) Veröffentlichungstag der Anmeldung: 02.02.1994
(73) Patentinhaber: Ferromatik Milacron Maschinenbau GmbH, D-79364 Malterdingen (DE)
(72) Erfinder: Keitel, Ralph, Dipl.-Ing., W-7832 Kenzingen (DE); Stillhard, Bruno, CH-9011 St. Gallen (CH)
(74) Vertreter: Röther, Peter, Dipl.-Phys.

(56) Entgegenhaltungen:
- EP-A- 0 193 617
- EP-A- 0 328 671
- PATENT ABSTRACTS OF JAPAN vol. 12, no. 274 (M-725)(3121) 29. Juli 1988 & JP-A-63 056 419 (FANUC)
- PATENT ABSTRACTS OF JAPAN vol. 11, no. 269 (M-621)(2716) 2. September 1987 & JP-A-62 073 921 (NISSEI PLASTICS)
- PATENT ABSTRACTS OF JAPAN vol. 10, no. 134 (M-479)(2191) 17. Mai 1986 & JP-A-60 259 419 (FANUC)

## Beschreibung

Die Erfindung bezieht sich auf eine Vorrichtung zum Erzeugen der Anlagekraft einer Düse eines Plastifizier- und Einspritzaggregates gegen eine an der feststehenden Formaufspannplatte einer Kunststoffspritzgießmaschine vorgesehene Formhälfte gemäß dem Oberbegriff des Patentanspruchs 1.

Vorrichtungen dieser Art sind bekannt (EP 0 328 671 A1). Die Druckfedern dieser bekannten Vorrichtung sind um die einzelnen Stangen eines Gestänges angeordnet, welches einerseits mit einer Platte, die als eines der Federlager dient und andererseits mit der Mutter des Spindelantriebs über Zwischenorgane verbunden ist. Das Federsystem liegt frei und ist betrieblichen und atmosphärischen Störeinflüssen ausgesetzt. Außerdem müssen die Stangen und die um diese herum angeordneten Druckfedern durch eine Platte hindurchgeführt werden, durch die auch die Spindel hindurchtritt, wobei diese Platte das andere Federlager bildet und fest mit dem Plastifizier- und Einspritzaggregat verbunden ist.

Aus der EP-A-0193617 ist eine weitere Vorrichtung der eingangs genannten Art bekannt, bei der in der horizontalen Ebene links und rechts von der Spindel in einem zur Seite hin offenen Gehäuse Druckfedern angeordnet sind, wobei die vordere Stirnplatte dieses Gehäuses und eine hinter den Federn angeordnete Platte die Widerlager für die Federn bilden. Die hintere Platte ist mit einer Mutter versehen, die auf dem Gewinde der Spindel läuft. Wird die Spindel in Drehung versetzt, presst sich die Platte 12 gegen die Federn und schiebt dabei das Gehäuse und damit die Einspritzvorrichtung auf die Formaufspannplatte zu. Ein ortsfester Endschalter schaltet den Motor ab, wenn das Einspritzaggregat gegen diesen Schalter stößt. Bei dieser vorbekannten Vorrichtung sind die Federn betrieblichen und atmosphärischen Störeinflüssen frei ausgesetzt und, da allein durch die Stellung des Endschalters der Verschiebeweg unabhängig von der jeweiligen Federbelastung bestimmt ist, arbeitet eine derartige Vorrichtung ungenau und unökonomisch, was die Federbelastung anbetrifft.

Weiterhin ist eine gattungsgemäße Vorrichtung aus dem Patent Abstract of Japan, Vol. 11, Nr. 269, (M621) (2716) bekannt. Hier ist zwar ein die Federn umgebendes Gehäuse vorgesehen, welches fest mit einer vorderen Stirnwand verbunden ist, durch die die Spindel hindurchreichen kann. Im Gehäuse auf der Spindel ist eine mit einem Innengewinde versehene Platte vorgesehen, die bei Verdrehung der Spindel die Feder gegen die rückseitige Stirnwand des Gehäuses drückt. Bei dem Verschiebeweg erreicht die Platte mit ihrem Zapfen einen Endschalter, bei dessen Erreichen ebenfalls der Motor abgestellt wird. Auch dieses Gehäuse ist nach unten, nach vorne und nach hinten offen, so daß die Federn äußeren Einflüssen ausgeliefert sind. Auch hier ist der Verschiebeweg durch den Abstand von Platte und Schalter vorgegeben.

Ausgehend von diesem Stand der Technik liegt der Erfindung die Aufgabe zugrunde, die Spindelantriebe der gattungsgemäßen Vorrichtung konstruktiv einfach auszugestalten und insbesondere die Druckfedern funktionsgerecht und vor äußeren Einflüssen hinreichend geschützt zu lagern und Beeinträchtigungen der Federorgane zu vermeiden bzw. möglichst gering zu halten.

Diese Aufgabe wird erfindungsgemäß dadurch gelöst, daß die mindestens eine Druckfeder in einer im Gehäuse und relativ zu diesem Gehäuse axial verschiebbaren, becherförmigen Aufnahme angeordnet ist, wobei der Becherboden als zweites Gegenlager für die Feder dient, und auf der von dem Spindelantrieb abgewandten Seite der becherförmigen Aufnahme die mit dieser axial verschiebbare Mutter angeordnet ist, welche mittels einer Paßfeder relativ zum Gehäuse verdrehsicher ist, und daß ein signalauslösendes Element für Beginn und Ende des Spannweges der mindestens einen Druckfeder vorgesehen ist.

Das becherförmige Element hat somit nicht nur die Aufgabe, die Druckfedern bzw. die Druckfeder gegen äußere Einflüsse zu schützen, sondern die Becherwandung dient im Zusammenhang mit dem Becherboden und der formseitigen Stirnplatte des Gehäuses als zuverlässige Führung beim Spannen und Entspannen der Feder bzw. Federn.

Da der Verschiebeweg des becherförmigen Elements auch ein Maß für die von der Feder aufgebrachte Kraft ist, eignet sich das becherförmige Element auch gut als Indikator für die im letzten Halbsatz des Anspruchs angesprochene Signalauslösung.

Das hat weiterhin den Vorteil, daß durch das signalauslösende Element die Feder bzw. die Federn lediglich den Anforderungen gemäß beansprucht werden . Darüber hinaus ergibt sich durch die erfindungsgemäße Ausgestaltung der Vorteil, daß trotz der guten Abkapselung der Federelemente nach außen hin die Vorrichtung äußerst reparatur- und wartungsfreundlich ist.

Gemäß einer ersten Ausführungsform der Erfindung (Anspruch 2) ist das signalauslösende Element ein berührungslos arbeitender Schalter, der durch die becherförmige Aufnahme betätigbar ist. Dabei dient der Schalter als Signalauslöser für den Beginn des Spannweges der Druckfeder, wobei der Spannweg so einstellbar ist, daß er einer vorgegebenen Düsenanlagekraft entspricht.

Gemäß einer weiteren Ausführungsform der Erfindung (Anspruch 3) wird das Auslösesignal für den Spannweg der Druckfeder durch einen Stromstoß im Stromkreis des Servomotors erzeugt, der bei Beginn des Spannweges durch die Erhöhung der Motorbelastung entsteht.

Gemäß dem Merkmal des Anspruchs 4 sind die Druckfedern vorteilhafterweise als Tellerfedern ausgebildet.

Gemäß dem Merkmal des Anspruchs 5 ist der weiter oben angeführte Schalter im Bereich des Bodens der becherförmigen Aufnahme angeordnet.

Die Erfindung ist in der Zeichnung anhand eines Ausführungsbeispieles dargestellt, bei dem ein Schalter im Gehäuse des Spindelantriebs vorgesehen ist.

Es zeigen:

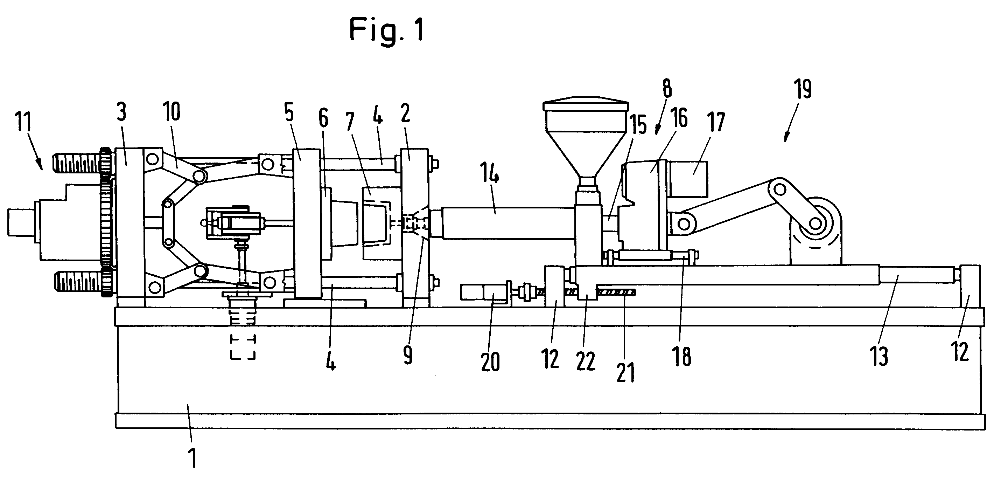

- Fig. 1: eine Seitenansicht einer Spritzgießmaschine und

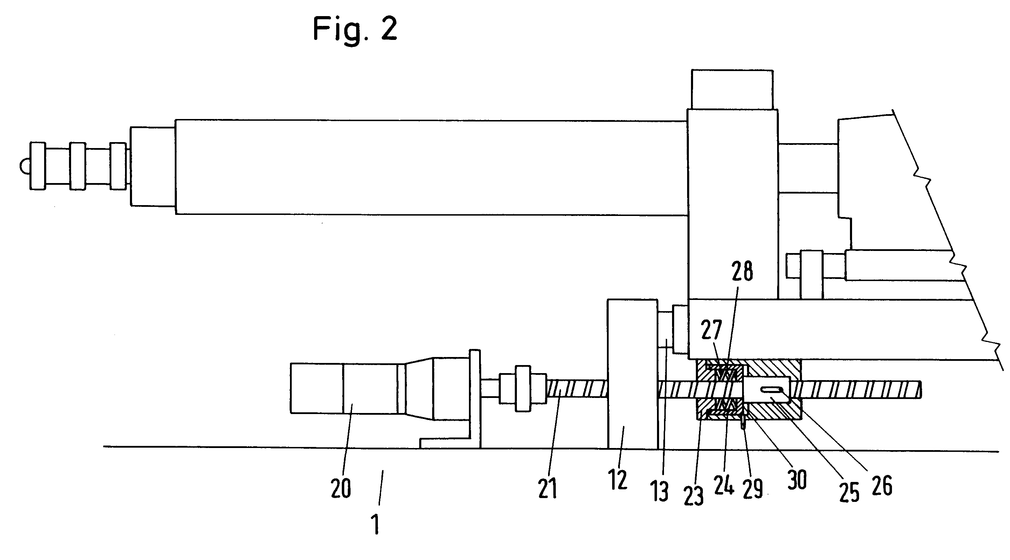

- Fig. 2: einen Ausschnitt aus Fig. 1
Gleiche Teile sind mit gleichen Bezugszeichen bezeichnet.

Auf einem Maschinenrahmen 1 sind die beiden feststehenden Ständerplatten 2 und 3 angeordnet, die mit den Holmen 4 (von ihnen sind nur die beiden vorderen Holme sichtbar) eine Führung für die verschiebbare Formaufspannplatte 5 mit der verschiebbaren Formhälfte 6 bilden.

Die Ständerplatte 2 dient in an sich bekannter Weise als feststehende Formaufspannplatte für die feststehende Formhälfte 7, gegen deren Angußbohrung die Düse des Plastifizier- und Einspritzaggregats 8 ansteht. Zu diesem Zweck weist die feststehende Formaufspannplatte einen Durchbruch 9 auf.

Zwischen der Ständerplatte 3 und der verschiebbaren Formaufspannplatte 5 ist die Kniehebeleinrichtung 10 angeordnet, die mit dem elektrischen Antrieb 11 das Schließsystem bildet. Die Einzelheiten sind an sich bekannt und deshalb nicht näher erläutert.

Zum Verschieben des Plastifizier- und Einspritzaggregats 8 weist der Maschinenrahmen 1 Widerlager 12 mit zwei Holmen 13 auf (es ist nur der vordere sichtbar), auf denen das Plastifizier- und Spritzaggregat verschiebbar angeordnet ist.

Der Plastifizier- und Spritzzylinder ist mit 14 bezeichnet, der Schaft 15 der Plastifizier- und Einspritzschnecke in dem Gehäuse 16 für den Rotationsantrieb 17 gelagert. Das Gehäuse 16 ist auf Holmen 18 verschiebbar angeordnet und mit dem Kurbeltrieb 19 gekoppelt, der während der Einspritzphase das Gehäuse 16 und damit die Plastifizier- und Einspritzschnecke verschiebt.

Der mit 20 bezeichnete Spindelantrieb - er weist einen Servomotor auf - für das Plastifizier- und Einspritzaggregat weist eine angetriebene Spindel 21 auf, die durch das eine Widerlager hindurchgeführt ist und weiterhin durch das Gehäuse 22 der Vorrichtung zum Erzeugen der Düsenanlagekraft hindurchgeführt ist.

Das Gehäuse ist mit dem Plastifizier- und Einspritzaggregat fest verbunden.

Der Spindelantrieb ist zwischen der feststehenden Formaufspannplatte und dem Plastifizier- und Einspritzaggregat auf dem Maschinenrahmen 1 feststehend angeordnet.

Das Gehäuse 22 weist eine Stirnplatte 23, eine in Richtung zur Stirnplatte 23 sich öffnende becherförmige Aufnahme 24 und eine Mutter 25 auf. Die Spindel ist durch die Stirnplatte 23 und durch die becherförmige Aufnahme 24 hindurchgeführt und steht mit der Mutter 25 nach dem Prinzip von Mutter und Schraube in Eingriff. Die Mutter 25 weist ein Langloch auf, welches zur Verdrehsicherung gegen das Gehäuse eine Paßfeder 26 aufweist.

In der becherförmigen Aufnahme ist die Druckfeder 27 angeordnet, die sich an der Stirnplatte 23 und am inneren Boden 28 des becherförmigen Gehäuses abstützt.

In der Wandung des Gehäuses 22 ist der berührungslos arbeitende Schalter 29, der zum Beispiel nach dem Prinzip der Feldplatte arbeitet, angeordnet, der ab einer Mindestentfernung des äußeren Bodens 30 der becherförmigen Aufnahme ein Ausgangssignal abgibt.

Die Vorrichtung arbeitet folgendermaßen:
Vor dem Einspritzen des plastifizierten Materials wird die Düse des Plastifizier- und Einspritzaggregats gegen die feststehende Formhälfte gepreßt. Dies hat zur Folge, daß durch eine weitere Rotation der Spindel die Mutter in der Zeichnung nach links verschoben wird und die Mutter die becherförmige Aufnahme nach links verschiebt. Durch diese Verschiebung der becherförmigen Aufnahme ändert sich der Abstand des Bodens der becherförmigen Aufnahme zu dem Meßwertaufnehmer, dessen magnetisches Feld geändert wird. Dies führt zu einem Ausgangssignal. Anhand der Steigung der Gewindespindel, der Getriebeübersetzung und weiterhin anhand der Schritte des Servomotors des Spindelantriebs wird die zusätzliche Umdrehung der Spindel zur Vorgabe der Düsenanlagekraft vorgegeben.

## Patentansprüche

1. Vorrichtung zum Erzeugen der Anlagekraft einer Düse eines Plastifizier- und Einspritzaggregats (8) gegen eine an der feststehenden Formaufspannplatte (2) einer Kunststoffspritzgießmaschine vorgesehenen Formhälfte (7), wobei die Vorrichtung mindestens eine Druckfeder (27) aufweist und einen Spindelantrieb (20), der zwischen der feststehenden Formaufspannplatte (2) und dem verschiebbaren Plastifizier- und Einspritzaggregat (8) angeordnet ist, wobei die Spindel (21) des Spindelantriebs (20) durch die Stirnplatte (23) eines mit dem verschiebbaren Plastifizier- und Einspritzaggregat (8) verbundenen Gehäuses (22) hindurchgeführt ist, in dem die mindestens eine Druckfeder (27) angeordnet ist und wobei auf der von dem Spindelantrieb (20) abgewandten Seite der Druckfeder (27) eine axial verschiebbare Mutter (25) relativ zum Gehäuse (22) verdrehsicher angeordnet ist,
dadurch gekennzeichnet,
daß die mindestens eine Druckfeder (27) in einer im Gehäuse (22) und relativ zu diesem Gehäuse (22) axial verschiebbaren, becherförmigen Aufnahme (24) angeordnet ist, wobei der Becherboden (28) als zweites Gegenlager für die Feder (27) dient, und auf der von dem Spindelantrieb (20) abgewandten Seite der becherförmigen Aufnahme (24) die mit dieser axial verschiebbare Mutter (25) angeordnet ist, welche mittels einer Paßfeder (26) relativ zum Gehäuse (22) verdrehsicher ist, und daß ein signalauslösendes Element (29) für Beginn und Ende des Spannweges der mindestens einen Druckfeder (27) vorgesehen ist.

2. Vorrichtung nach Anspruch 1,
dadurch gekennzeichnet,
daß das signalauslösende Element ein berührungslos arbeitender Schalter (29) ist, der durch die becherförmige Aufnahme (24) betätigbar ist.

3. Vorrichtung nach Anspruch 1,
dadurch gekennzeichnet,
daß als signalauslösendes Element der Servomotor für den Spindelantrieb dient, wobei das Auslösesignal für den Spannweg der Druckfeder (27) durch einen Stromstoß im Stromkreis des Servomotors (20) erzeugt wird.

4. Vorrichtung nach einem der vorhergehenden Ansprüche,
dadurch gekennzeichnet,
daß die Druckfedern (27) als Tellerfedern ausgebildet sind.

5. Vorrichtung nach Anspruch 2,
dadurch gekennzeichnet,
daß der Schalter (29) im Bereich des Bodens der becherförmigen Aufnahme (24) angeordnet ist.

## Claims

1. Device for generating the contact pressure of a nozzle of a plasticizing and injection unit (8) against a mould half (7) mounted on the stationary platen (2) of a plastic injection moulding machine, the device having at least one compression spring (27) and one spindle drive (20), the latter being arranged between the stationary platen (2) and the shiftable plasticizing and injection unit (8), the spindle (21) of the spindle drive (20) passing through the front plate (23) of a housing (22) connected with the shiftable plasticizing and injection unit (8) and accomodating the (at least one) compression spring (27), and an axially shiftable nut (25), locked so as to keep it from turning relatively to the housing (22), said nut (25) being mounted at the far end of the compression spring (27) as referred to the spindle drive (20),
**characterized in**
that the (at least one) compression spring (27) is accommodated in a cup-shaped element (24) which is shiftable inside the housing (22) axially to said housing (22), the bottom of the cup (28) serving as second support for the spring (27);
that the nut (25) mounted at the far end of the cup-shaped element (24) as referred to the spindle drive (20), is axially shiftable with said cup-shaped element (24) and secured against turning relatively to the housing (22) by a key (26),
and that a signal generating element (29) is provided for limiting the compression of the (at least one) compression spring (27).

2. Device according to claim 1,
**characterized in**
that the signal generating element (29) is a proximity switch triggered by the cup-shaped element (24).

3. Device according to claim 1,
**characterized in**
that the servomotor of the spindle drive serves as the signal generating element, the triggering signal for compression of the compression spring (27) being generated by a current surge in the circuit of the servomotor (20).

4. Device according to one of the preceding claims
**characterized in**
that the compression springs (27) are designed as disk springs.

5. Device according to claim 2,
**characterized in**
that the switch (29) is installed in the bottom area of the cup-shaped element (24).

## Revendications

1. Dispositif pour la génération de la pression d'appui de la tuyère d'un appareil de plastification et d'injection (8) contre un demimoule (7) monté sur un plateau porte-outillage stationnaire (2) d'une machine d'injection de matière plastique, le dit dispositif étant équipé d'au moins un ressort de pression (27) et une commande à vis (20), cette dernière étant disposée entre le plateau porte-outillage stationnaire (2) et l'appareil de plastification et d'injection déplaçable (8), la vis (21) de la commande (20) passant à travers la plaque frontale (23) d'un boîtier (22) qui est relié avec l'appareil de plastification et d'injection déplaçable (8) et dans lequel le (au moins un) ressort de pression (27) est logé; un écrou (25) axialement déplaçable et fixé de manière à ne pas tourner relativement au boîtier (22) étant disposé du côté du ressort de pression (27) éloigné de la commande à arbre (20),
**caractérisé en ce que**
le (au moins un) ressort de pression (27) est disposé dans un élément en forme de coupe (24) logée dans le boîtier (22) et qui est déplaçable en sens axial relativement au dit boîtier (22), le fond de la coupe (28) servant de deuxième palier pour le ressort (27),
que l'écrou (25), axialement déplaçable avec l'élément en forme de coupe (24) et disposé du côté éloigné de cette coupe par rapport à la vis de commande (20), est calé par une clavette (26) de manière à l'empêcher de tourner relativement au boîtier (22),
et qu'un élement déclencheur de signal (29) est prévu pour limiter la voie de compression du ressort (27).

2. Dispositif suivant la revendication 1,
**caractérisé en ce que**
l'élément déclencheur de signal est un commutateur de proximité (29) pouvant être commandé par l'élément en forme de coupe (24).

3. Dispositif suivant la revendication 1,
**caractérisé en ce que**
le servomoteur de la commande à vis (20) sert d'élément déclencheur de signal, l'impulsion de déclenchement pour la compression du ressort de pression (27) étant générée par un coup de courant dans le circuit du servomoteur (20).

4. Dispositif suivant une des revendications précédentes,
**caractérisé en ce que**
les ressorts de pression sont du type à disques.

5. Dispositif suivant la revendication 2,
**caractérisé en ce que**
le commutateur (29) est disposé dans l'aire du fond de l'élément en forme de coupe (24).
